# EUROPEAN PATENT APPLICATION

(11) **EP 4 715 185 A1**
(43) Date of publication of application: **25.03.2026**
(21) Application number: 25200648.1
(22) Date of filing: 05.09.2025
(51) Int. Cl.: F02C 7/22

(54) **ADDITIVELY MANUFACTURED ANNULAR FUEL MANIFOLD**

(30) Priority: 20.09.2024 US 202418892216
(71) Applicant: RTX Corporation, Farmington, CT 06032 (US)
(72) Inventor: BINEK, Lawrence A., Glastonbury, 06033 (US); PAULINO, Jose R., Jupiter, 33478 (US)
(74) Representative: Dehns

(57) **Abstract**

A gas turbine engine case structure includes the unitary combination of: a case wall having an inner surface and an outer surface; at least one fuel inlet (264); circumferentially-distributed fuel injectors protruding inward from the case wall and having an outlet; and a fuel plenum fluidically between the at least one fuel inlet (264) and the fuel injectors and configured so that each inlet (264) of the at least one inlet (264) is coupled to feed multiple of the fuel injectors. The fuel plenum alternatingly passes forward and aft.

## Description

### BACKGROUND

The disclosure relates to gas turbine engines. More particularly, the disclosure relates to additively manufactured fuel manifolds.

Gas turbine engines (used in propulsion and power applications and broadly inclusive of turbojets, turboprops, turbofans, turboshafts, industrial gas turbines, and the like) may include an additively manufactured fuel manifold receiving fuel through one or more inlet ports and discharging fuel from a plurality of outlet ports. The manifold in outlet ports may, themselves, be fuel nozzles as part of the additively manufactured piece. Alternatively, manifold outlet ports may be bosses or other fittings for receiving separate fuel nozzles.

### SUMMARY

One aspect of the disclosure involves a gas turbine engine case structure comprising the unitary combination of: a case wall having an inner surface and an outer surface; at least one fuel inlet; a circumferentially-distributed plurality of fuel injectors protruding inward from the case wall and each having an outlet; and a fuel plenum fluidically between the at least one fuel inlet and the fuel injectors and configured so that each inlet of the at least one inlet is coupled to feed multiple injectors of the plurality of fuel injectors. The fuel plenum comprises a plurality of first legs and a plurality of second legs circumferentially alternating with the plurality of first legs. For each injector of the plurality of fuel injectors, an associated said first leg and second leg converge from opposite circumferential directions but with forward axial component.

In a further example of any of the foregoing, additionally and/or alternatively, the fuel plenum is full annulus.

In a further example of any of the foregoing, additionally and/or alternatively, the at least one inlet is at most two inlets.

In a further example of any of the foregoing, additionally and/or alternatively, centerlines of the first legs and second legs extend at median angles θ_{1A}, θ_{1B} off circumferential of 5.0° to 45°.

In a further example of any of the foregoing, additionally and/or alternatively, centerlines of the first legs and second legs extend between forward and aft extremes separated by an axial span L₁ of at least 4.0 millimeters.

In a further example of any of the foregoing, additionally and/or alternatively, said axial span is 2.0% to 10% of a diameter across the case structure centerline of the fuel plenum at the forward extremes.

In a further example of any of the foregoing, additionally and/or alternatively, for each said fuel injector the case structure comprises: a splash plate having a first face and a second face, the fuel injector outlet facing the second face; and a support connecting the splash plate to the case wall and the fuel injector.

In a further example of any of the foregoing, additionally and/or alternatively, there are six to eight said fuel injectors.

A further example of any of the foregoing may additionally and/or alternatively include gas turbine engine including the gas turbine engine case structure and further comprising a rotor having a compressor section and a turbine section.

A further example of any of the foregoing may additionally and/or alternatively include a method for manufacturing the gas turbine engine case structure, the method comprising: additive manufacture with a build direction (590) within 15° of parallel to an axis of the gas turbine engine case structure.

A further example of any of the foregoing may additionally and/or alternatively include vibrating so that powder passes through each injector from an adjacent said first segment and an adjacent said second segment.

In a further example of any of the foregoing, additionally and/or alternatively, the additive manufacture is PBF-LB.

A further example of any of the foregoing may additionally and/or alternatively include a method for using the gas turbine engine case structure, the method comprising: introducing fuel through the inlet; the fuel passing circumferentially through the fuel plenum to the plurality of fuel injectors and out their outlets; and the fuel mixing with air and combusting.

In a further example of any of the foregoing, additionally and/or alternatively, for at least two of the injectors, the fuel passes through the plenum in a zig-zag fashion through at least two of one of the first segments and the second segments and at least one of the other of the first segments and the second segments.

A further aspect of the disclosure involves a gas turbine engine case structure comprising the unitary combination of: a case wall having an inner surface and an outer surface; at least one fuel inlet; a circumferentially-distributed plurality of fuel injectors protruding inward from the case wall and having an outlet; and a fuel plenum fluidically between the at least one fuel inlet and the fuel injectors and configured so that each inlet of the at least one inlet is coupled to feed multiple injectors of the plurality of fuel injectors. The fuel plenum alternatingly passes forward and aft.

In a further example of any of the foregoing, additionally and/or alternatively, an inlet passageway from the fuel inlet is coupled to the to the fuel plenum at a local aftward extreme of the fuel plenum.

In a further example of any of the foregoing, additionally and/or alternatively, the fuel injectors are coupled to the to the fuel plenum at respective local forward extremes of the fuel plenum.

In a further example of any of the foregoing, additionally and/or alternatively, the fuel plenum is full annulus.

In a further example of any of the foregoing, additionally and/or alternatively, the at least one inlet is at most two inlets.

In a further example of any of the foregoing, additionally and/or alternatively, a single additively manufactured piece forms the case wall and bounds the fuel plenum.

The features of the examples above may be combined in any combination unless expressly indicated otherwise or technically infeasible.

The details of one or more examples are set forth in the accompanying drawings and the description below. Other features, objects, and advantages will be apparent from the description and drawings, and from the claims.

### BRIEF DESCRIPTION OF THE DRAWINGS

FIG. 1 is a schematic central longitudinal sectional view of a gas turbine engine.
FIG. 1A is an enlarged view of a portion of the engine of FIG. 1.
FIG. 2 is a view of a single-piece diffuser/combustor/turbine inlet nozzle body.
FIG. 3 is a transverse sectional view of the body of FIG. 2, taken along line 3-3.
FIG. 4 is a cutaway outer diameter view of the body of FIG. 3.
FIG. 5 is a central longitudinal sectional view of the body through a fuel inlet taken along line 5-5 of FIG. 4.
FIG. 6 is a central longitudinal sectional view of the body through a fuel nozzle taken along line 6-6 of FIG. 4.

Like reference numbers and designations in the various drawings indicate like elements.

### DETAILED DESCRIPTION

As is discussed below, in replacing a baseline pure annular fuel line of a conventional fuel manifold with a fuel line or passageway whose centerline departs from pure annular by adding longitudinal excursions, this departure aids in additive manufacture. A true annular manifold/plenum passageway will have its centerline in a single plane. Its integration with the relatively thin outer wall of the diffuser causes the wall of the manifold portion to protrude radially (at least one of inward and outward).

This radial protrusion of the baseline effectively creates a cantilever as the part is being built. The cantilever may be associated with deformation during the additive manufacture process. By departing from such a true annular situation, the longitudinal component of the passageway structure may have a buttressing effect supporting further build layers (in more gradual radial excursion).

Additionally, the baseline true annular passageway may trap powder and make powder extraction difficult. By having a longitudinal component, gravity removal may be easy to achieve via vibrating and/or inverting.

Additionally, the baseline cantilevering effect produces surface roughness because there is a greater lateral shift between the perimeters of successive layers than might otherwise occur. Such surface roughness may adversely affect fluidic performance. The longitudinal component means that there may be a smaller transverse layer-to-layer shift and thus less roughness of the interior surface of the manifold/plenum.

Additionally, the angled build can improve sintering or melting and reduce the chance of loosely bound/partially fused particles which may survive initial evacuation/cleaning but then dislodge in operation.

The modification causes no appreciable increase in cost relative to a baseline because the amount of consolidated material and additive manufacture build time (e.g., in a powder bed fusion-laser beam (PBF-LB) system) is comparable to the baseline.

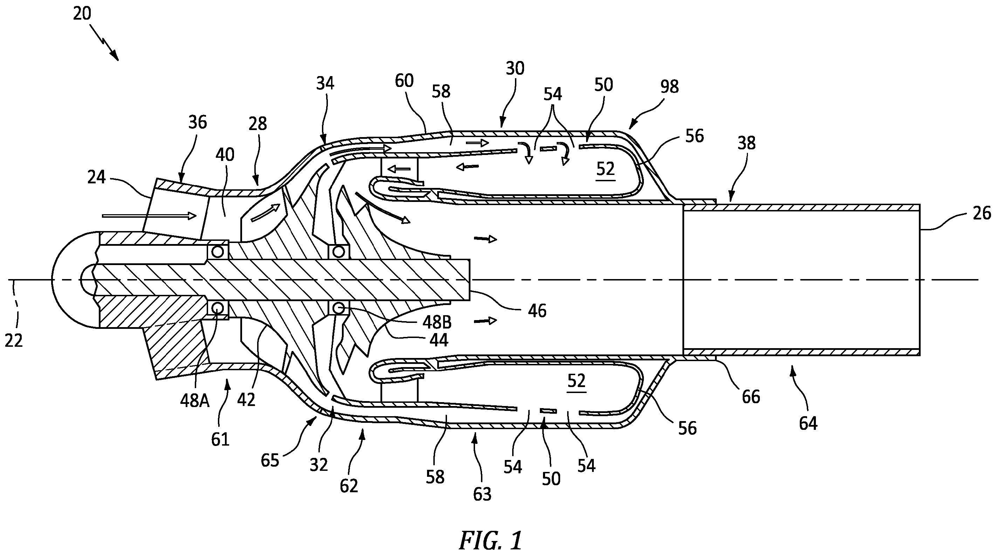

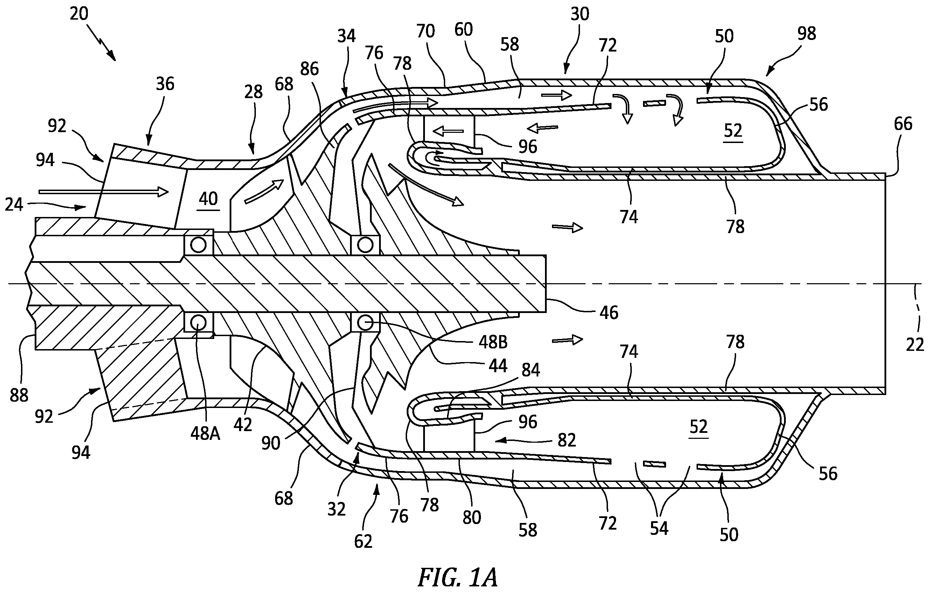

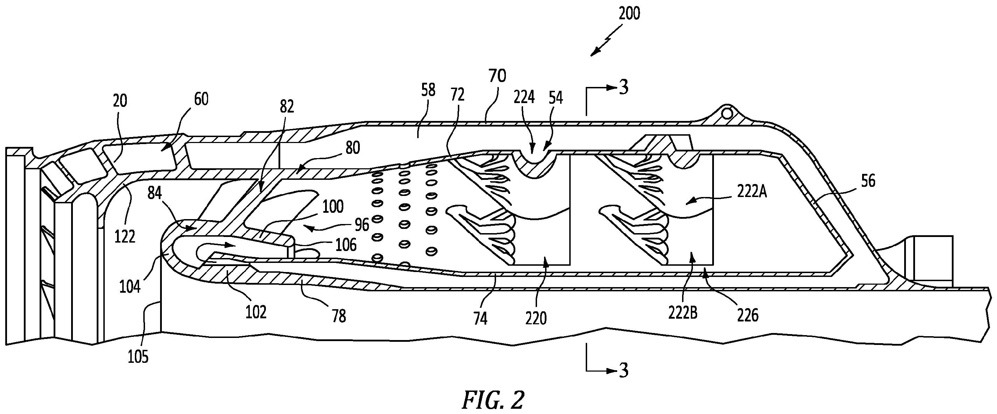

One or more longitudinal sections of the case or static structure may be unitarily formed as a full annulus or a circumferentially split structure. Thus, in one example discussed, a forward structure forming a compressor case 61 (FIG. 1) may largely be one single full annulus piece and an aft structure 63 forming a diffuser, combustor body, and turbine case may largely be a second piece 200 (FIG. 2) joined at a joint 65 such as a bolt circle at mating flanges. Such a single piece 200 may be additively manufactured such as via powder bed fusion-laser beam (PBF-LB), selective laser sintering (SLS), or directed energy deposition (DED). Example material is a nickel-based superalloy such as the Inconel family (e.g., Inconel 625). Nevertheless, features discussed below may be applied to split cases and may be applied to axially and/or radially less extensive pieces (e.g., wherein the combustor body (walls) and/or the diffuser are not part of the single piece).

For use in a such a reverse flow combustor gas turbine engine, FIG. 2 shows such a second piece 200 including: the diffuser 60; combustor wall structures 56,72,74; combustor exit nozzle or turbine inlet vane ring 82; and turbine section wall structures 78. The nozzle 82 has a circumferential array of airfoils or vanes 96 extending radially from inboard ends at an inner platform 84 to outboard ends at an outer shroud or platform 80. In the reverse flow combustor situation, the airfoils 96 have upstream leading edges aft of forward trailing edges. The inner platform 84 is configured to provide the inside of a turn which turns the gaspath radially inward and back aft/rearward from the reverse flow combustor. Thus, the example inner platform 84 has a generally C-shaped central longitudinal section with a radially outer wall section 100 and, as portions of the turbine wall structure 78, a radially inner wall section 102 and a turn 104 (defining a forward rim 105) at a forward end of the inner platform 84. The outer wall thus extends forward/downstream from an aft/upstream leading edge or rim 106 to a forward junction with the turn 104. Similarly, the inner wall extends aft/downstream from a junction with the turn 104.

FIG. 1 is a schematic central longitudinal sectional illustration of a gas turbine engine 20. The gas turbine engine 20 of FIG. 1 is configured as a single spool, radial-flow turbojet turbine engine. This gas turbine engine 20 is configured for propelling an aircraft such as, but not limited to, an unmanned aerial vehicle (UAV), a drone or any other manned or unmanned aircraft or self-propelled projectile. The present disclosure, however, is not limited to such an example turbojet turbine engine configuration nor to an aircraft propulsion system application. For example, the gas turbine engine 20 may alternatively be configured as a turboshaft, a turboprop, an auxiliary power unit (APU), and/or an industrial gas turbine.

The gas turbine engine 20 of FIG. 1 extends axially along an axial centerline 22 between a forward, upstream airflow inlet 24 and an aft, downstream exhaust 26. This axial centerline 22 may also be a rotational axis for various components within the gas turbine engine 20.

The gas turbine engine 20 includes a compressor section 28, a combustor section 30, and a turbine section 32. The gas turbine engine 20 also includes a static engine structure 34. This static engine structure 34 houses the compressor section 28, the combustor section 30, and the turbine section 32. The static engine structure 34 of FIG. 1 also forms an inlet section 36 and an exhaust section 38 for the gas turbine engine 20, where the inlet section 36 forms the airflow inlet 24 and the exhaust section 38 forms the exhaust 26.

The engine sections 36, 28, 30, 32 and 38 are arranged sequentially from upstream to downstream along a gaspath or core flowpath 40 that extends through the gas turbine engine 20 from the airflow inlet 24 to the exhaust 26. Each of the engine sections 28 and 32 includes a respective rotor 42 and 44. The example rotors are co-spooled to rotate as a unit. Each of these rotors 42, 44 includes a plurality of rotor blades arranged circumferentially around and connected to at least one respective rotor hub (for centrifugal or disk for axial). The rotor blades, for example, may be formed integral with or mechanically fastened, welded, brazed, adhered and/or otherwise attached to the respective rotor disk(s).

The compressor rotor 42 may be configured as a centrifugal/radial flow rotor. The turbine rotor 44 may also be configured as a radial flow rotor. The compressor rotor 42 is connected to the turbine rotor 44 through a shaft 46. This shaft 46 is rotatably supported by the static engine structure 34 through a plurality of bearings 48A and 48B (generally referred to as 48); e.g., rolling element bearings, journal bearings, etc.

The combustor section 30 includes an example annular combustor 50 with an annular combustion chamber 52. The combustor 50 of FIG. 2 is configured as a reverse flow combustor. Inlets ports 54 (formed at dilution chutes discussed below) into the combustion chamber 52, for example, may be arranged at (e.g., on, adjacent or proximate) and/or towards an aft bulkhead wall 56 of the combustor 50. An outlet from the combustor 50 may be arranged axially aft of an inlet to the turbine section 32. The combustor 50 may also be arranged radially outboard of and/or axially overlap at least a (e.g., aft) portion of the turbine section 32. With this arrangement, the core flowpath 40 of FIG. 1 reverses direction (e.g., from a forward-to-aft direction to an aft-to-forward direction) a first time as the flowpath 40 extends from a diffuser plenum 58 surrounding the combustor 50 into the combustion chamber 52. The core flowpath 40 of FIG. 1 then reverses direction (e.g., from the aft-to-forward direction to the forward-to-aft direction) a second time as the flowpath 40 extends from the combustion chamber 52 into the turbine section 32.

During operation, air enters the gas turbine engine 20 through the inlet section 36 and its airflow inlet 24. The inlet section 36 directs this air from the airflow inlet 24 into the core flowpath 40 and the compressor section 28. The airflow inlet 24 of FIG. 1 thereby forms a forward, upstream inlet to the core flowpath 40 and the compressor section 28. The air within the core flowpath 40 may be referred to as core air.

The core air is compressed by the compressor rotor 42 and directed through a diffuser 60 and its plenum 58 into the combustion chamber 52. Fuel is injected and mixed with the compressed core air to provide a fuel-air mixture. This fuel-air mixture is ignited within the combustion chamber 52, and combustion products thereof flow through the turbine section 32 and cause the turbine rotor 44 to rotate. This rotation of the turbine rotor 44 drives rotation of the compressor rotor 42 and, thus, compression of the air received from the airflow inlet 24. The exhaust section 38 receives the combustion products from the turbine section 32. The exhaust section 38 directs the received combustion products out of the gas turbine engine 20 to provide forward engine thrust.

The static engine structure 34 of FIG. 1 may include some or all static engine components included in the gas turbine engine 20. Herein, the term "static" may describe a component that does not rotate with the rotating assembly or spool (e.g., an assembly of the rotors 42 and 44 and the shaft 46) during gas turbine engine operation. A static component, for example, may refer to any component that remains stationary during gas turbine engine operation such as, but not limited to, a wall, a liner, a strut, a fixed vane, a fuel nozzle, a conduit, etc. The static engine structure 34 of FIG. 1, for example, includes a forward, case structure 62 and an aft, exhaust duct structure 64.

The example case structure 62 of FIG. 1A is configured as a generally tubular structure formed in two general sections: an inlet/compressor case 61; and a diffuser/combustor/turbine case 63. The case structure 62, for example, extends axially along the axial centerline 22 from the forward airflow inlet 24 to an outlet 66 from the turbine section 32. The case structure 62 also extends circumferentially about (e.g., completely around) the axial centerline 22 such that the case structure 62 has, for example, a full hoop geometry. The two sections 61, 63 may be secured to each other at a bolt flange joint 65.

The case structure 62 includes one or more case walls. The inlet/compressor case 61 of FIG. 2A, for example, includes a compressor wall 68. The diffuser/combustor/turbine case 63 and its FIG. 2 main piece 200 have a diffuser wall 70, an outer combustor wall 72 of the combustor 50, an inner combustor wall 74 of the combustor 50, the bulkhead wall 56 of the combustor 50, an outer turbine wall 76 and an inner turbine wall 78. Each of these case walls 56, 68, 70, 72, 74, 76 and/or 78 may be generally tubular or generally annular. Each of the case walls 68, 70, 72, 74, 76, 78 of FIG. 1A, for example, is tubular, and the bulkhead wall 56 is annular.

The compressor wall 68 extends axially along the axial centerline 22 between and is connected to the inlet section 36 and the diffuser wall 70. The compressor wall 68 of FIG. 2A circumscribes, axially overlaps and thereby houses the compressor rotor 42.

The diffuser wall 70 extends axially along the axial centerline 22 between and is connected to the compressor wall 68 and an aft end portion of the inner turbine wall 78. The diffuser wall 70 is spaced / displaced radially outboard from and axially overlaps the combustor 50. The diffuser wall 70 of FIG. 1A thereby forms an outer peripheral boundary of the diffuser plenum 58 that surrounds the combustor 50 and the combustor wall 72 locally forms an inner boundary. FIG. 2 also shows diffuser vanes 120 radially between a forward portion of the diffuser wall 70 and an inner wall 122 that merges with the outer platform 80 which, in turn, merges with the combustor outer wall 72.

The outer combustor wall 72 extends axially along the axial centerline 22 between and may be connected to the bulkhead wall 56 and an outer platform 80 of an exit nozzle or turbine inlet vane ring 82 from the combustion chamber 52. The inner combustor wall 74 is circumscribed and axially overlapped by the outer combustor wall 72. The inner combustor wall 74 extends axially along the axial centerline 22 between and may be connected to the bulkhead wall 56 and an inner platform 84 of the exit nozzle 82. The bulkhead wall 56 extends radially between and is connected to aft end portions of the outer combustor wall 72 and the inner combustor wall 74. The case walls 56, 72 and 74 may thereby collectively form peripheral boundaries of the combustion chamber 52 therebetween.

The outer turbine wall 76 may be connected to the exit nozzle outer platform 80. The outer turbine wall 76 projects axially out from the exit nozzle outer platform 80 and extends axially towards / to an aft, downstream end of an inner platform or hub 86 of the compressor rotor 42. This outer turbine wall 76 is circumscribed and axially overlapped by the diffuser wall 70. The outer turbine wall 76 of FIG. 1A may thereby form an inner peripheral boundary of the core flowpath 40 within the diffuser 60, and may form an outer peripheral boundary of the core flowpath 40 within a (e.g., upstream) portion of the turbine section 32. The outer turbine wall 76 of FIG. 1A also circumscribes, axially overlaps and thereby houses a (e.g., upstream) portion of the turbine rotor 44.

The inner turbine wall 78 may be connected to the exit nozzle inner platform 84. An upstream portion of the inner turbine wall 78 projects axially (in the aft-to-forward direction) out from the exit nozzle inner platform 84 to a turning portion of the inner turbine wall 78. A downstream portion of the inner turbine wall 78 projects axially (in the forward-to-aft direction) away from the inner turbine wall turning portion to the turbine section outlet 66. The inner turbine wall 78 is circumscribed and axially overlapped by the combustor 50. The inner turbine wall 78 is also spaced / displaced radially inboard from the combustor 50. The inner turbine wall 78 of FIG.1A thereby forms an inner peripheral boundary of the diffuser plenum 58 that surrounds the combustor 50. The inner turbine wall 78 forms an outer peripheral boundary of the core flowpath 40 within a (e.g., downstream) portion of the turbine section 32. The inner turbine wall 78 also circumscribes, axially overlaps and thereby houses a (e.g., downstream) portion of the turbine rotor 44.

The static engine structure 34 may also include one or more internal support structures with one or more support members. Examples of support members include, but are not limited to, struts, structural guide vanes, bearing supports, bearing compartment walls, etc. The static engine structure 34 of FIG. 1A, for example, includes a forward support structure 88, an aft support structure 90, an inlet nozzle 92 and the exit nozzle 82. The forward support structure 88 and the inlet nozzle 92 may be configured together. The forward support structure 88 may be configured to support the forward bearing 48A. The aft support structure 90 may be configured to support the aft bearing 48B. The inlet nozzle 92 may be configured to condition the core air entering the compressor section 28. The inlet nozzle 92, for example, may include one or more guide vanes 94 which impart swirl to the core air. The exit nozzle 82 may similarly be configured to condition the combustion products exiting the combustor section 30. The exit nozzle 82, for example, may include one or more guide vanes 96 which import swirl to the combustion products, where these guide vanes 96 are connected to and extend radially between the exit nozzle inner and outer platforms 84 and 80. The static engine structure 34, of course, may also or alternative include various other static / stationary gas turbine engine components.

As discussed above, in an example engine having a reverse flow combustor, an example HPT vane has an outer diameter shroud and an inner diameter platform. The example platform is of generally c-shaped central longitudinal section, having: an outer diameter wall at inner diameter ends of the airfoils; an inner diameter wall spaced radially inward thereof; and forward turn joining those walls. The outer diameter wall generally forms an inner diameter boundary of the gaspath exiting the combustor; the platform turn then forms the inside/aft boundary of a turn of the gaspath radially inward toward the turbine inlet; and the inner diameter wall then forms the outer diameter boundary of the gaspath at or near the turbine section outlet.

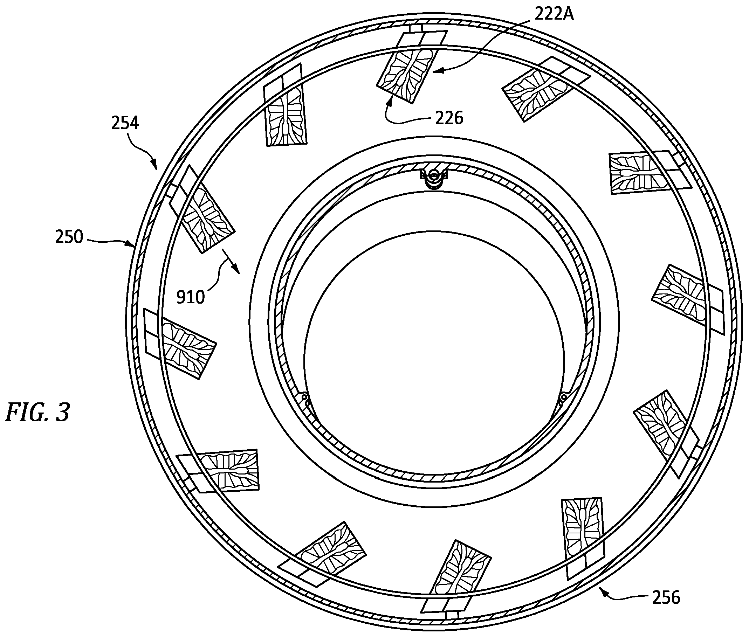

FIG. 2 shows a forward circumferential array of dilution chutes/flow tubes 220 and an aft circumferential array of dilution chutes/flow tubes 222A/222B. The dilution chutes have outer diameter inlets along the wall structure 72 which forms an inner diameter wall of the diffuser plenum 58 and an outer diameter wall of the combustor combustion chamber 52 and inner diameter outlets 226 in the combustion chamber 52/combustor interior. Given the reverse flow nature, the forward array inlets are upstream of the aft array inlets and the forward array outlets are downstream of the aft array outlets. The dilution chutes introduce air (airflow 910 of FIG. 3) from the diffuser plenum 58 into the combustion chamber 52 to provide a tangential swirl component to that airflow in the combustion chamber 52. The orientation providing that tangential swirl is seen, for example, in FIG. 3.

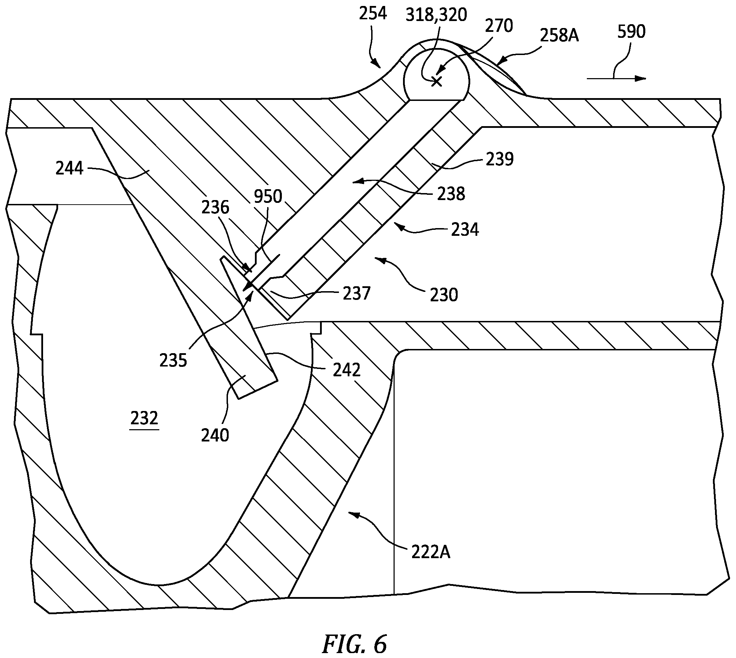

The example forward array dilution chutes all exclusively introduce air. The aft array dilution chutes are divided into two groups alternating with each other. One group 222B introduces only air and the other group 222A is associated with fuel injectors to inject fuel (fuel jet 950 of FIG. 6) into their introduced air 910.

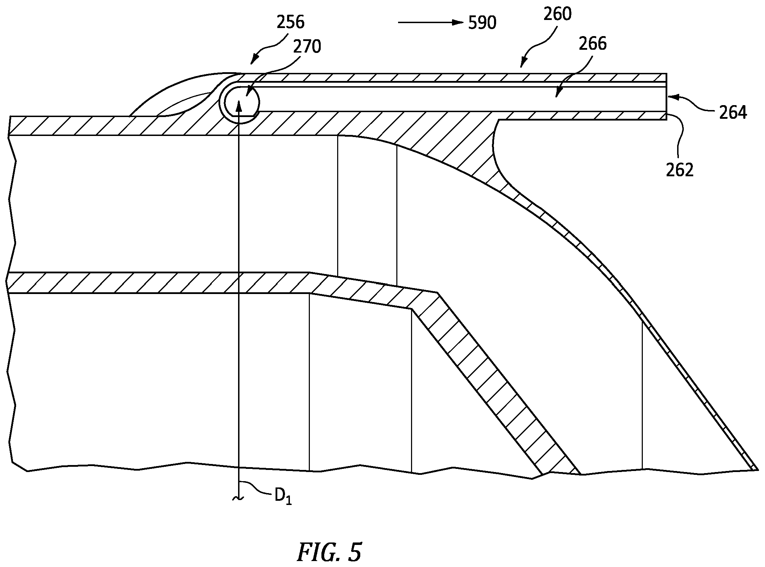

FIG. 6 shows a fuel injector and atomizer unit 230 for introducing fuel to the interior 232 of one of the aft dilution chutes 222A. The unit 230 comprises an injector 234 having an outlet 235 of an orifice 236 in a distal end wall 237 and fed by a passageway 238 within the injector. The injector also has a sidewall 239. Each of the nozzles is fed, in the example system, from an inlet plenum 270 fed by a single inlet passageway 266 (FIG. 5) of a single fuel inlet conduit/fitting 260 having an inlet 264. For each individual injector, a respective passageway leg 248 extends from the plenum 270 to merge with the passageway 248. The injector 234 thus extends at least partially across the diffuser plenum 58.

The example fuel plenum 270 is a full annulus extending 360° around the engine. The fuel flow entering from the inlet passageway 266 may thus split into two equal branch flows passing respectively clockwise and counterclockwise through adjacent segments 258A and 258B when viewed from the front. Each of these two branch flows feeds a respective subgroup of the injectors with the final injectors along the respective branches being joined by a final two segments 258A and 258B. These joining segments may help improve pressure balance between the two branches and provide fueling uniformity.

However, alternative embodiments (not shown) may have less than the full annulus plenum. For example, those final two linking segments 258A and 258B may be omitted. In some such implementations, for structural integrity, the metal forming the segments may not be totally eliminated. The passageway through such segments may simply be eliminated and the segments optionally may be reduced in cross-sectional extent but still protrude from the adjacent wall surface and provide hoop strength and the like.

Each injector also includes a splash plate 240 (FIG. 6) having an aft face 242 facing the nozzle outlet 235 and a distal end face of the injector (an outer face of the end wall 237). For structural support of the nozzle and splash plate, the splash plate and nozzle are at the distal end of a radially inward- and axially aft-extending web of ligament 244 extending inward from the diffuser wall 70.

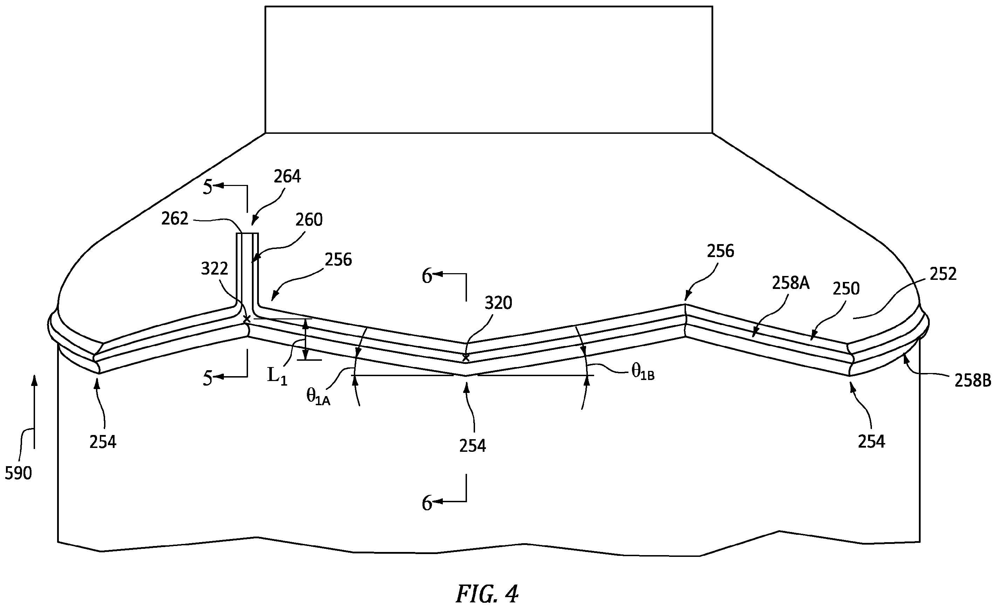

FIG. 4 shows a build direction 590 which may correspond to an ultimate fore-to-aft direction of the engine and parallel to the rotor axis of rotation and which may be an upward vertical direction in the factory frame of reference.

FIG. 4 shows a fuel manifold 250 protruding from an adjacent outer surface 252 of the diffuser outer wall. As noted above, the example manifold and its plenum 270 (with plenum centerline 318 of FIG. 6) departs from true annular with longitudinal excursions between forward (in the engine frame of reference and lower in the manufacture frame of reference) extremes 254 and aft extremes 256. Thus, the example construction creates a plurality of alternating manifold segments 258A and 258B extending in opposite directions from each extreme to the next. FIG. 4 shows center-to-center (centers 320 and 322 marked in FIG. 4) axial spacing of the extremes 254, 256 from each other as L₁. Additionally, FIG. 5 shows a diameter at the center of the passageway 270 as D₁. Example D₁ is about 0.15 meter, more broadly, 0.10 meter to 0.20 meter or 0.10 meter to 0.60 meter. Example L₁ is 7.6 millimeters, more broadly, 4.0 millimeters to 50 millimeters. An alternative lower end on such ranges is 5.0 millimeters. Alternative upper ends are 25 millimeters and 15 millimeters, but are generally limited by part geometry/available length. An example L₁ is about 5% of D₁. More broadly it may be about 2.0% to 10% or 2.0% to 20%.

In the example manifold, at one of the extremes 256, the fuel inlet conduit 260 joins the zigzag circumferential manifold. The inlet conduit 260 extends from an aft/upper end 262. The aft/upper end 262 bounds an inlet 264 to an inlet passageway 266 (FIG. 5). The passageway 266 merges with (to ultimately feed) the annular passageway 270 through the segments 258A, 258B. The passageway 270, thus, has respective segments within the manifold segments 258A, 258B.

At each of the extremes 254, an associated one of the fuel injectors is located (FIG. 6).

FIG. 4 shows the manifold segments 258A, 258B (and thus passageway 270 legs/segments) extending helically in opposite directions by respective angles θ_{1A} and θ_{1B}, respectively off circumferential. Although the segments 258A, 258B are shown as true helical (e.g., as straight lines if unwrapped) other configurations are possible including a varying angle (e.g., so as to have concavity or convexity when unwrapped). The magnitudes of the example angles θ_{1A} and θ_{1B} are an example 10°, more broadly, 5.0° to 45°. The high end is limited by part geometry and pressure loss. An alternative lower end to such ranges is 7.0°. Alternative upper ends to such ranges are 15.0° or 25.0°.

For examples other than pure helical, at least a portion may be in such angle range (whether concave, convex, or a combination). For a relatively continuous concavity or convexity, such angle values may be present near the middle of the segment with, depending on which, the angle decreasing toward one end and increasing toward the other.

The angle θ_{1A}, θ_{1B} may be, as noted above, effective to allow evacuation of unsintered powder. For example, after sintering, the piece may be vibrated while in an upright orientation (direction 590 pointing upwards). In such a situation, the powder in the legs adjacent to a given peak 254 will drain down into the associated injector and out its orifice.

Component materials and manufacture techniques and assembly techniques may be otherwise conventional (e.g., unchanged from a baseline engine's).

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A gas turbine engine case structure (61; 62; 63) comprising the unitary combination of:
a case wall (70) having an inner surface and an outer surface;
at least one fuel inlet (264);
a circumferentially-distributed plurality of fuel injectors (234) protruding inward from the case wall (70) and each having an outlet (235); and
a fuel plenum (270) fluidically between the at least one fuel inlet (264) and the fuel injectors (234) and configured so that each inlet (264) of the at least one inlet (264) is coupled to feed multiple injectors (234) of the plurality of fuel injectors (234),
wherein:
the fuel plenum (270) comprises a plurality of first legs (258A) and a plurality of second legs (258B) circumferentially alternating with the plurality of first legs (258A); and
for each injector (234) of the plurality of fuel injectors (234), an associated said first leg (258A) and second leg (258B) converge from opposite circumferential directions but with forward axial component.

2. The gas turbine engine case structure of claim 1 wherein:
the fuel plenum (270) is full annulus.

3. The gas turbine engine case structure of claim 1 or 2 wherein:
the at least one inlet (264) is at most two inlets (264).

4. The gas turbine engine case structure of any preceding claim wherein:
centerlines (318) of the first legs (258A) and second legs (258B) extend at median angles (θ_{1A} θ_{1B}) off circumferential of 5.0° to 45°.

5. The gas turbine engine case structure of any preceding claim wherein:
centerlines (318) of the first legs (258A) and second legs (258B) extend between forward and aft extremes (254, 256) separated by an axial span (L₁) of at least 4.0 millimeters.

6. The gas turbine engine case structure of claim 5 wherein said axial span (L₁) is 2.0% to 10% of a diameter (D₁) across the case structure centerline (318) of the fuel plenum at the forward extremes (254).

7. The gas turbine engine case structure of any preceding claim wherein for each said fuel injector (234) the case structure comprises:
a splash plate (240) having a first face and a second face (242), the fuel injector outlet (235) facing the second face (242); and
a support connecting the splash plate (240) to the case wall (70) and the fuel injector (234).

8. The gas turbine engine case structure of any preceding claim wherein there are six to eight said fuel injectors (234).

9. A gas turbine engine (20) including the gas turbine engine case structure (61; 62; 63) of any preceding claim and further comprising:
a rotor having a compressor section (28) and a turbine section (32).

10. A method for manufacturing the gas turbine engine case structure (61; 62; 63) of any of claims 1 to 8, the method comprising:
additive manufacture with a build direction (590) within 15° of parallel to an axis (22) of the gas turbine engine case structure (61; 62; 63).

11. The method of claim 10 further comprising:
vibrating so that powder passes through each injector (234) from an adjacent said first segment (258A) and an adjacent said second segment (258B).

12. The method of claim 10 or 11 wherein:
the additive manufacture is PBF-LB.

13. A method for using the gas turbine engine case structure (61; 62; 63) of any of claims 1 to 8, the method comprising:
introducing fuel (950) through the inlet (264);
the fuel (950) passing circumferentially through the fuel plenum (270) to the plurality of fuel injectors (234) and out their outlets (235); and
the fuel (950) mixing with air (910) and combusting,
optionally wherein:
for at least two of the injectors (234), the fuel (950) passes through the plenum (270) in a zig-zag fashion through at least two of one of the first segments (258A) and the second segments (258B) and at least one of the other of the first segments (258A) and the second segments (258B).

14. A gas turbine engine case structure (61; 62; 63) comprising the unitary combination of:
a case wall (70) having an inner surface and an outer surface;
at least one fuel inlet (264);
a circumferentially-distributed plurality of fuel injectors (234) protruding inward from the case wall (70) and having an outlet (235); and
a fuel plenum (270) fluidically between the at least one fuel inlet (264) and the fuel injectors (234) and configured so that each inlet (264) of the at least one inlet (264) is coupled to feed multiple injectors (234) of the plurality of fuel injectors (234),
wherein:
the fuel plenum (270) alternatingly passes forward and aft.

15. The gas turbine engine case structure of claim 14 wherein one or more of:
an inlet passageway (238) from the fuel inlet (264) is coupled to the to the fuel plenum (270) at a local aftward extreme (256) of the fuel plenum (270);
the fuel injectors (234) are coupled to the to the fuel plenum (270) at respective local forward extremes (254) of the fuel plenum (270);
the fuel plenum (270) is full annulus;
the at least one inlet (264) is at most two inlets (264); or
a single additively manufactured piece (200) forms the case wall (70) and bounds the fuel plenum (270).
